# EUROPÄISCHE PATENTSCHRIFT

(11) **EP 2 938 085 B1**
(45) Veröffentlichungstag und Bekanntmachung des Hinweises auf die Patenterteilung: **11.11.2020**
(21) Anmeldenummer: 15001162.5
(22) Anmeldetag: 20.04.2015
(51) Int. Cl.: H04N 21/2343, H04N 21/4402, H04N 21/63, H04N 21/647, H04N 21/24, H04N 21/442, H04N 21/6373

(54) **VERFAHREN UND VORRICHTUNG ZUR ÜBERMITTLUNG VON KODIERTEN MEDIENDATEN**
METHOD AND DEVICE FOR TRANSMISSION OF ENCODED MEDIA DATA
PROCÉDÉ ET DISPOSITIF DESTINÉS À LA TRANSMISSION DE DONNÉES MULTIMÉDIA CODÉES

(30) Priorität: 25.04.2014 DE 102014006080
(43) Veröffentlichungstag der Anmeldung: 28.10.2015
(73) Patentinhaber: Unify GmbH & Co. KG, 81739 München (DE)
(72) Erfinder: Budzisz, Lukasz, 10557 Berlin (DE); Döring, Michael, 15370 Fredersdorf (DE); Wolisz, Adam, 12161 Berlin (DE); Tran-GIA, Phuoc, 97076 Würzburg (DE); Zinner, Thomas, 97072 Würzburg (DE); Gebert, Steffen, 97074 Würzburg (DE); Lehrieder, Frank, 70839 Gerlingen (DE); Zitterbart, Martina, 76344 Eggenstein (DE); Martin, Denis, 76131 Karlsruhe (DE)
(74) Vertreter: Fritzsche, Thomas

(56) Entgegenhaltungen:
- WO-A1-02/052860
- US-A1- 2006 224 763
- US-A1- 2013 318 251

## Beschreibung

Die Erfindung betrifft ein Verfahren und eine Vorrichtung zur Übermittlung von kodierten Mediendaten.

Für skalierbare Video-Codecs (SVC - Scalable Video Codec, z. B. H.264 SVC oder H.265 SVC) sorgen zusätzliche Schichten neben der Basisschicht (Base Layer) für höhere Video-Qualitätsniveaus und ermöglichen eine Adaption der Videoqualität eines bereits kodierten Video-Streams.

Heutzutage trägt RTCP als bandinterner Rückmeldungs-(Feedback)-Kanal innerhalb RTP von dem/den Zielknoten zu dem/den Quellknoten Informationen, aus welchen die tatsächliche Ende-zu-Ende-Netzdienstqualität an dem Quellknoten (z. B. Paketverlustrate, Verzögerung, Jitter) abgeleitet werden kann. Auf der Grundlage dieser Information kann der Kodierer an dem Quellknoten eine Erzeugung zusätzlicher Schichten zur Übertragen beginnen oder wieder aufnehmen, die Bildfrequenz bzw. Rahmenrate (frame rate) verringern oder das Kompressionsverhältnis erhöhen, um den Bandbreitenverbrauch zu reduzieren. Um dies zu erleichtern, wird die Verknüpfung von Ende zu Ende (end-to-end link) durch eine Beziehung von Quellknotenanschluss zu Zielknotenanschluss identifiziert. Dieses Konzept gilt auch für Verbindungen von einem Punkt zu mehreren Punkten (pointto-multipoint connections), z. B. für Video-Verteilerdienste.

Ein anderes bekanntes Konzept, das dem H.264 SVC gewidmet ist, ist ein intelligenter Router, auf welchem (mobile) Geräte bzw. Endgeräte ihre Fähigkeiten, z. B. Bildschirmgröße, -auflösung etc., registrieren. Ferner wird die verfügbare Brandbreite zu dem Gerät hin berücksichtigt. Die Videoquelle erzeugt alle Schichten des SVC-Codecs. Dieser Video-Stream wird über einen intelligenten Router weitergeleitet, der für jedes individuelle Ziel-Gerät auf der Grundlage der Registrierungsinformation entscheidet, wie viele Schichten zu jenem Gerät hin weitergeleitet werden. Demzufolge werden für jeden Verbindungsendpunkt individuelle Video-Streams weitergeleitet.

PPP-Multilink [RFC1990] beschreibt z. B. eine Bündelung multipler Verbindungen (Links) in einer virtuellen Verbindung (virtual link) in der Verbindungsschicht. Dies verbirgt Informationen über die Unterschiede der verwendeten Zugangstechnologieen, und es ist keine weitere Adaption der Transportschicht bezüglich unterschiedlicher Verbindungsqualitäten möglich.

Multipath-TCP [RFC6824] ermöglicht die Ausschöpfung unterschiedlicher Netzpfade durch Verwendung von Unterströmen bzw. Teilströmen (Subflows). Es wird jedoch nur ein einziger Transportdienst zu Anwendungen (d. h. zuverlässiger Transport) bereitgestellt.

Die WO 02/052860 A1 verweist auf Stand der Technik, bei welchem ein komprimierter Video-Stream durch mehrere priorisierte Schichten definiert wird, wobei eine Basisschicht mit der höchsten Priorität die Daten enthält, die zur Darstellung des Video-Inhalts unverzichtbar sind, während eine oder mehrere Erweiterungsschichten Daten enthalten, die eine Verbesserung der Darstellungsqualität ermöglichen. Je nach Netzqualität werden Erweiterungsschichten, beginnend mit derjenigen der geringsten Priorität, von der Übertragung ausgeschlossen, bis eine gewünschte Bandbreite erreicht ist. Davon ausgehend wird dann vorgeschlagen, einen komprimierten Video-Datenstrom über wenigstens zwei drahtlose Kanäle zu übertragen, bei welchen der Video-Datenstrom erste Daten mit einer ersten Prioritätsstufe und zweite Daten mit einer zweiten Prioritätsstufe aufweist, wobei die erste Prioritätsstufe in ihrem Beitrag zu der Qualität des empfangenen Video-Streams von größerer Wichtigkeit als die zweite Prioritätsstufe ist, die ersten Daten demjenigen Kanal zugeordnet werden, wobei zwei Kanäle mit jeweiligen Qualitätsparametern aufgebaut werden, und wobei die ersten Daten demjenigen Kanal zugeordnet werden, der unter den Kanälen den höchsten Qualitätsparameter aufweist (einschließlich der Möglichkeit, dass beide Kanäle gleiche Qualitätparameter aufweisen). Bei einer festgestellten Veränderung der Übertragungsqualität im Laufe der Übertragung ist vorgesehen, die Zuordnung derart zu ändern, dass die ersten Daten stets dem Kanal mit dem höchsten Qualitätsparameter zugeordnet werden. Die ersten und zweiten Daten können einer Basisschicht und einer oder mehreren Erweiterungsschichten des komprimierten Video-Datenstroms entsprechen. Anhand von Historiendaten über Veränderungen der Qualitätsparameter kann die Zuordnung eine Erwägung umfassen, welcher Kanal über eine vorbestimmte zukünftige Zeit wahrscheinlich die höhere Qualität aufweist.

Die Entgegenhaltung US 2006/0224763 A1 betrifft Verfahren, Vorrichtungen und Systeme, bei welchen ein Server in der Lage ist, Streaming-Inhaltselemente eines Quellinhalts über zwei unterschiedliche drahtlose Kanäle (channels) simultan oder abwechselnd zu übertragen. Die Streaming-Inhaltselemente können dabei redundant oder dupliziert für beide Kanäle auf der Grundlage der Kanalbedingungen, über welche sie übertragen werden, transkodiert und dann redundant über beide Kanäle übertragen werden.

Die US 2013/0318251 A1 betrifft Verfahren und Systeme für adaptives Mehrweg-Streaming von Inhalten in Kommunikationsnetzen. Kodierter Inhalt wird in mehrere parallele Inhalts-Streams geteilt. Ein erster Stream weist eine Basisschicht und eine erste zusätzliche Schicht auf, wobei die Basisschicht einen Inhalts-Stream mit niedriger Bandbreite und Referenzinformationen für zusätzliche Schichten enthält. Ein zweiter Stream weist die Basisschicht und wenigstens eine zweite zusätzliche Schicht auf. Wenigstens teilweise auf der Grundlage eines verfügbaren Bandbreitenparameters wird wenigstens einer des ersten Streams und des zweiten Streams übertragen. Das Verfahren ist auch auf mehr als zwei Streams anwendbar. Stets wird über jeden Kanal die gesamte Video-Information, die zur Dekodierung des Video-Inhalts aus der Basisschicht und einer zusätzlichen Schicht erforderlich ist, übertragen.

Es ist eine Aufgabe der vorliegenden Erfindung, ein Verfahren, eine Vorrichtung und ein System zur Übermittlung von kodierten Mediendaten anzugeben, das in der Lage ist, die vorstehenden Nachteile im Stand der Technik wenigstens teilweise zu überwinden.

Die Aufgabe wird erfindungsgemäß durch die Merkmale der unabhängigen Ansprüche gelöst. Vorteilhafte Ausführungsformen und Weiterentwicklungen der Erfindung sind in den Unteransprüchen angegeben.

Ein Grundgedanke der vorliegenden Erfindung besteht darin, mehr als einen Netzzugang gleichzeitig auszunutzen, um die Übermittlung von SVC-Schichten auf der Grundlage der gegenwärtigen Netzqualität automatisch zu steuern. Eine Beurteilung der Netzqualität kann beispielsweise entweder auf der Ende-zu-Ende-Grundlage, z. B. wie durch RTCP definiert, oder lokal in jeder Zugangstechnologie geschehen, z. B. kann der Signal-Rauschabstand bzw. das Signal-zu-RauschVerhältnis (SNR - signal-to-noise ratio) ausgenutzt werden.

Demgemäß wird nach einem ersten Gesichtspunkt der Erfindung ein Verfahren gemäß Patentanspruch 1 zur Übermittlung von kodierten Mediendaten auf der Grundlage eines Schichtenmodells vorgeschlagen, mit den Schritten:
a) Aufteilen der Mediendaten auf eine Basisschicht, die die für die Dekodierung mindestens erforderlichen Daten enthält, und wenigstens eine zusätzliche Erweiterungsschicht, die die für die Dekodierung von Qualitätsmerkmalen des Ursprungsmediums erforderlichen Daten enthalten;
b) Übermitteln der Basisschicht und der wenigstens einen Erweiterungsschicht über wenigstens zwei Netzzugänge;
c) Auswählen eines ersten Netzzugangs mit einer für die Übermittlung der Basisschicht ausreichenden Netzqualität und/oder -beständigkeit zur Übermittlung der Basisschicht, und
d) Auswählen wenigstens eines zweiten Netzzugangs unter den Netzzugängen in Abhängigkeit von der Bandbreite des ersten Netzzugangs und der Netzqualität und der Netzbeständigkeit der Netzzugänge zur Übermittlung der wenigstens einen Erweiterungsschicht.

Als Mediendaten werden im Sinne der Erfindung insbesondere, aber nicht nur, Audiodaten und/oder Videodaten und/oder Textdaten und/oder Videotextdaten und/oder Konferenzdaten und/oder anwendungsspezifische Daten etc. sein. Umfasst sind auch Multimediendaten wie beispielsweise kombinierte Audio/VideoDaten und/oder Konferenzdaten und/oder Präsentationsdaten und/oder Spielsituationsdaten etc. sowie insbesondere Echtzeitkommunikationsdaten wie beispielsweise Telefoniedaten und/oder Videotelefoniedaten und/oder Streaming-Daten etc. Vorzugsweise umfassen die Mediendaten Video und/oder Audio eines mehrschichtigen Codec, insbesondere eines Video-Codec gemäß H.264 SVC. Basisschicht und Erweiterungsschicht sind im Sinne der Erfindung inhaltstragende Subschichten, wobei die Basisschicht die für die Dekodierung mindestens erforderlichen Daten enthält und wobei eine oder mehrere Erweiterungsschichten Daten zur Dekodierung von Qualitätsmerkmalen des Ursprungsmediums enthalten. Netzzugang kann im Sinne der Erfindung jeder Datenübertragungsweg sein und kann auch Netzzugangspunkte, -knoten, -protokolle, -schnittstellen, -schichten etc. umfassen. Der Basisschicht kann eine Priorität bei der Zuordnung des Netzzugangs mit der besten Netzqualität und/oder -beständigkeit zukommen. In diesem Fall kann der Basisschicht ein Netzzugang zugeordnet sein mit einer besseren Netzqualität und/oder -beständigkeit als der Netzzugang, der der Erweiterungsschicht zugeordnet ist. Es versteht sich, dass die Schritte c) und d) zeitlich vor dem Schritt b) ausgeführt werden können. Die Schritte c) und d) können auch wiederholt ausgeführt werden, wenn der zweite Netzzugang wegfällt oder gestört ist oder ein besserer Netzzugang verfügbar wird. Hierzu kann die Netzumgebung ständig überwacht werden. Es ist zu verstehen, dass die wenigstens eine Erweiterungsschicht über den wenigstens einen zweiten Netzzugang übermittelt wird. Dies kann auch bedeuten, dass eine einzige Erweiterungsschicht auf mehrere zweite Netzzugänge aufgeteilt übertragen wird, eine oder mehrere Erweiterungsschichten über einen einzigen zweiten Netzzugang übertragen wird/werden, oder mehrere Erweiterungsschichten über mehrere zweite Netzzugänge übertragen werden, abhängig von Anforderungen und Fähigkeiten der jeweiligen Netzzugänge.

In einer bevorzugten Weiterbildung der Erfindung dieses Gesichtspunkts ist vorgesehen, dass das Verfahren eine codec-spezifische Parametrisierung der Priorität für die Teilschichten eines Codecs berücksichtigt.

In einer bevorzugten Weiterbildung der Erfindung dieses Gesichtspunkts ist vorgesehen, dass das Verfahren die weiteren Schritte aufweist:
e) Ermitteln eines Rauschabstands von verfügbaren Netzzugangspunkten; und
f) Approximieren der Netzqualität der verfügbaren Netzzugangspunkte unter Einbeziehung der Metrik des ermittelten Rauschabstands.

Der Rauschabstand ist definiert als Verhältnis von Signalpegel zu Rauschpegel (signal-to noise ratio - SNR). Die Schritte e) und f) können in den Schritten c) und/oder d) integriert sein.

In einer bevorzugten Weiterbildung der Erfindung dieses Gesichtspunkts ist vorgesehen, dass das Verfahren den weiteren Schritt aufweist:
g) Hinzufügen einer Sequenznummer vor jedem Stück der kodierten Mediendaten vor dem Übermitteln des Stücks.

Da gemäß der Erfindung mehrere Netzzugänge, also Übertragungswege, zur Übermittlung der Nutzdaten verwendet werden, die auch unterschiedliche Latenzzeiten etc. aufweisen können, kann durch das Hinzufügen der Sequenznummer auch das Zusammenfügen auf der Empfängerseite erleichtert werden.

Ein weiterer Gesichtspunkt der Erfindung betrifft ein Verfahren zum Empfang von kodierten Mediendaten auf der Grundlage eines Schichtenmodells, mit den Schritten:
A) Empfangen von Mediendaten, die auf eine Basisschicht und wenigstens eine zusätzliche Erweiterungsschicht aufgeteilt sind, über wenigstens einen Netzzugang; und
B) Zusammenführen der Basisschicht und der wenigstens einen Erweiterungsschicht der so erfolgreich übermittelten Schichten zu dekodierbaren Mediendaten.

Es ist ersichtlich, dass das Verfahren dieses Gesichtspunkts die Empfängerseite betrifft, während der vorherige Gesichtspunkt die Senderseite betraf. Demgemäß muss das Übermittlungsverfahren dieses Gesichtspunkts keine, kann aber gleichwohl auch Schritte zur Übertragung an sich aufweisen. Somit kann das Übermittlungsverfahren dieses Gesichtspunkts auch allgemein als Verfahren zur Verarbeitung von kodierten Mediendaten verstanden werden. Die gemäß dem Verfahren dieses Erfindungsgesichtspunkts empfangenen Daten sind Daten, die mittels eines Verfahrens gemäß dem vorherigen Erfindungsgesichtspunkts bereitgestellt wurden. Durch das Zusammenführen enthalten die dekodierbaren Daten mindestens die Basisschicht (sonst wäre keine Dekodierung möglich) und, je nach Übermittlungserfolg, eine oder mehrere Erweitungsschichten.

In einer bevorzugten Weiterbildung der Erfindung dieses Gesichtspunkts ist vorgesehen, dass das Verfahren die weiteren Schritte aufweist:
C) Puffern empfangener Datenstücke der Mediendaten, und
D) Zusammenführen der empfangenen und gepufferten Datenstücke in der richtigen Reihenfolge, vorzugsweise anhand einer jedem Datenstück vorangestellten Sequenznummer.

In den Verfahren gemäß jedem der vorstehenden Erfindungsgesichtspunkte ist vorzugsweise vorgesehen, dass die wenigstens eine Erweiterungsschicht Daten zur Dekodierung von einem oder mehreren der folgenden Qualitätsmerkmale enthält für:
- eine höhere Übertragungsfehlerredundanz als die in der Basisschicht,
- eine höhere Video-Auflösung als die in der Basisschicht,
- eine 3-dimensionale Video-Auflösung,
- eine höhere Bildwiederholrate als die in der Basisschicht,
- eine höhere Audio-Empfangsqualität als die in der Basisschicht,
- eine mehrkanalige Empfangsqualität, insbesondere eine mehrkanalige Stereo-, Surround- oder Spacial-Audio-Empfangsqualität.

Eine höhere Bildwiederholrate umfasst auch den Fall, dass über die Erweiterungsschicht Laufbild übertragen werden kann, wenn die Basisschicht nur ein Standbild oder einen Avatar aufweist.

Ein weiterer Gesichtspunkt der Erfindung betrifft eine Vorrichtung zur Ausführung des Verfahrens nach einem der vorstehenden Erfindungsgesichtspunkte, wobei die Vorrichtung insbesondere einen Server (130) und/oder ein mobiles Endgerät (110) aufweist. Es versteht sich, dass das Verfahren bzw. einzelne Verfahrensabschnitte durch Funktionseinheiten, die in der Vorrichtung implementiert sind, gesteuert wird bzw. werden. Die Funktionseinheiten können auf einem einzigen Gerät implementiert sein, oder sie können in beliebiger Weise auf mehrere Geräte verteilt sein. Es ist sinnvoll, wenn Funktionseinheiten, die das Verfahren des ersten Erfindungsgesichtspunkts betreffen, auf einer Senderseite implementiert sind, und wenn Funktionseinheiten, die das Verfahren des zweiten Erfindungsgesichtspunkts betreffen, auf einer Empfängerseite implementiert sind. Es können aber auch zumindest Teile des Verfahrens des ersten Erfindungsgesichtspunkts auf der Empfängerseite ausgeführt werden und/oder zumindest Teile des Verfahrens des zweiten Erfindungsgesichtspunkts auf der Senderseite ausgeführt werden. Auch ist zu beachten, dass Instanzen auf dem Übertragungsweg wie etwa Router, Gateways, Vermittlungsstellen und -zentralen etc. beide Seiten von Sender und Empfänger vertreten können. Derartige Instanzen können auch beide Gesichtspunkte der Erfindung verwirklichen, und es kann auch sein, dass eine solche Instanz nur mit einem Teil der Datenstücke entsprechend jeweils über den betreffenden Übertragungsweg übermittelten Schichten befasst ist. Mit anderen Worten, die Vorrichtung im Sinne der Erfindung umfasst sowohl Einzelgeräte, die nur einen Gesichtspunkt der erfindungsgemäßen Verfahren abdecken, als auch Einzelgeräte, die Teile oder die Gesamtheit beider Gesichtspunkte abdecken, als auch ein System, bei dem Teile und/oder die Gesamtheit eines Gesichtspunkte und/oder Teile und/oder die Gesamtheit beider Gesichtspunkte auf mehrere Geräte verteilt ist bzw. sind.

Der erfindungsgemäße Lösungsansatz kann mit bestehenden Technologien kombiniert werden und kann auch die durch den Benutzer wahrgenommene Gesamterfahrung verbessern. Techniken wie die Messung des SNR und deren Einsatz als Metrik für die Einschätzung der Netzqualität ermöglichen im Vergleich mit RTCP eine genauere Annäherung der jüngsten Netzqualität. Im Vergleich mit existierenden Ansätzen wie etwa PPP-Multilink, Verwaltung der Verbindungen/ QoS/Layer und Zusammenführung im Empfänger ist die Verwendung von multiplen Netzzugängen gemäß der Offenbarung dieser Anmeldung viel flexibler in der Übermittlung von kodierten Mediendaten.

Genauer gesagt wird beispielsweise ein (mobiles) Gerät über wenigstens einen Netzzugang mit einer Videoquelle, die alle Schichten eines skalierbaren Video-Codecs verteilt, verbunden. Ferner werden die Verfügbarkeit des Netzzugangs und dessen gegenwärtige individuelle Transportkapazität, -zuverlässigkeit und - qualität gemessen. Diese Information wird gemäß der Erfindung zu einer Funktionseinheit hin verbreitet, wobei die wahrgenommene Benutzererfahrung z. B. über das E-Modell gemäß ITU-T Recommendation G.107 unter Annäherung beispielsweise eines erwarteten Durchschnittsmeinungswerts (MOS - Mean Opinion Score) abgeschätzt wird.

Die in dieser Anmeldung beschriebene Prozedur ermöglicht eine unterschiedliche Verwendung von skalierbaren Video-Codecs für (mobile) Geräte und durchquerte Netzelemente, falls - vorteilhafterweise - mehr als ein Netzzugang mit variierenden Netzbedingungen verfügbar ist. Die Steuerung der unterschiedlichen Schichten bezüglich Routing und Übermittlung des skalierbaren Videos findet automatisch und während eines Streamings ohne Benutzer-Interaktion statt. Abgesehen von einer Beschreibung der Erfordernisse für die individuellen Medienschichten zu Beginn der Kommunikation und letztendlichen Richtlinien zur Verkehrshandhabung ist keine manuelle Konfiguration erforderlich.

Das erfindungsgemäße Verfahren ist insbesondere in einem mobilen Szenario, z B. bei Verwendung eines Smartphones, vorteilhaft. Es ermöglicht auch ein Video-Streaming unter Verwendung eines skalierbaren Codecs, macht Gebrauch von detaillierten Informationen über die spezifischen Anforderungen der Erweiterungsschichten und ermöglicht auch eine Approximation der von einem Benutzer wahrgenommenen Qualität eines unterschiedlichen Subsatzes (Subsets) von verfügbaren Erweiterungsschichten. Das Verfahren ermittelt bzw. nutzt auch Informationen über die Verfügbarkeit der Netzzugänge und deren gegenwärtige und tatsächliche Transportkapazität, Zuverlässigkeit und Qualität. Für den drahtlosen Zugang wird dies durch bandinterne Spektralmessungen und Kenntnis über eine Korrelation von Spektralmessungen und Fähigkeiten ermöglicht. Funktionale Einheiten wie etwa ein Entscheidungsmanager oder einer transportbewusste Schicht können ein Weitergabeverhalten auf der Grundlage dieser Informationen proaktiv einstellen. Daneben erfolgt eine Auswahl unterschiedlicher Transportfähigkeiten (z. B. zuverlässiger Transport, Fehlerkorrektur und Priorisierung) auf der Grundlage der Wichtigkeit der unterschiedlichen Erweiterungsschichten. Auf der Grundlage der Netzfähigkeiten ist auch eine Unterstützung unterschiedlicher QoS-Klassen für die spezifischen Erweiterungsschichten möglich.

Diese Anmeldung offenbart somit eine automatisierte Steuerung dieser Schichten auf der Grundlage der tatsächlichen Netzbedingungen, d. h., Netzverfügbarkeit und Netzeigenschaften. Die Erfindung wird durch jeweilige Verfahren zur Übermittlung von kodierten Mediendaten auf Sender- und Empfängerseite oder eine Kombination dieser Verfahren, jeweilige Vorrichtungen zur Ausführung eines der Verfahren und ein System zur Ausführung des bzw. der Verfahren verwirklicht. Die Erfindung kann auch durch ein Computerprogramm, umfassend Programmbefehle, die einen Computer dazu veranlassen, die Verfahrensschritte wenigstens eines der beschriebenen Verfahren auszuführen, wenn das Computerprogramm auf den Computer geladen oder von diesem ausgeführt wird, ein Softwareprodukt, das auf einem durch einen Computer lesbaren Medium gespeichert ist und das vorzugsweise direkt in den internen Speicher eines Computer geladen werden kann und das Programmcodes zur Durchführung der Verfahrensschritte wenigstens eines der beschriebenen Verfahren, wenn das Computerprogramm auf dem Computer ausgeführt wird, aufweist, und/oder ein digitales Speichermedium mit elektrisch lesbaren Steuersignalen, welche mit einem programmierbaren Computer arbeiten können, um Kommunikationsvorgänge zu verwalten, wobei die Steuersignale ausgelegt und angepasst sind, den Computer zu veranlassen, die Verfahrensschritte wenigstens eines der beschriebenen Verfahren auszuführen, verkörpert sein.

Weitere Merkmale, Aufgaben, Vorteile und Einzelheiten der vorliegenden Erfindung werden aus der nachstehenden Beschreibung konkreter Ausführungsbeispiele und ihrer zeichnerischen Darstellung in den beigefügten Figuren noch deutlicher werden. Es versteht sich, dass Merkmale, Aufgaben, Vorteile und Einzelheiten einzelner Ausführungsbeispiele auf andere Ausführungsbeispiele übertragbar sind und auch im Zusammenhang mit den anderen Ausführungsbeispielen als offenbart gelten sollen, soweit dies nicht aus technischen oder naturgesetzlichen Gründen offensichtlich abwegig ist. In diesem Sinne können Merkmale verschiedener Ausführungsbeispiele grundsätzlich stets miteinander kombiniert werden, und die Kombination kann ebenfalls als Ausführungsbeispiel der Erfindung verstanden werden.

Im Folgenden wird die Erfindung anhand bevorzugter Ausführungsbeispiele und mit Hilfe von Figuren näher beschrieben. Dabei ist bzw. sind
- Fig. 1: ein schematisches Blockschaubild eines Systems gemäß der vorliegenden Erfindung;
- Fign. 2A bis 2C: aufeinander folgende Abschnitte eines Sequenzdiagramms zur Veranschaulichung des erfindungsgemäßen Verfahrens gemäß einer Ausführungsform der vorliegenden Erfindung;
- Fign. 3A bis 3C: aufeinander folgende Abschnitte eines Sequenzdiagramms zur Veranschaulichung des erfindungsgemäßen Verfahrens gemäß einer anderen Ausführungsform der vorliegenden Erfindung.

Die Figuren sind rein schematisch und nicht notwendigerweise maßstabsgetreu. Die zeichnerischen Darstellungen und Beschreibungen hiervon sind zur beispielhaften Veranschaulichung des Prinzips der Erfindung gedacht und sollen diese in keiner Weise einschränken.

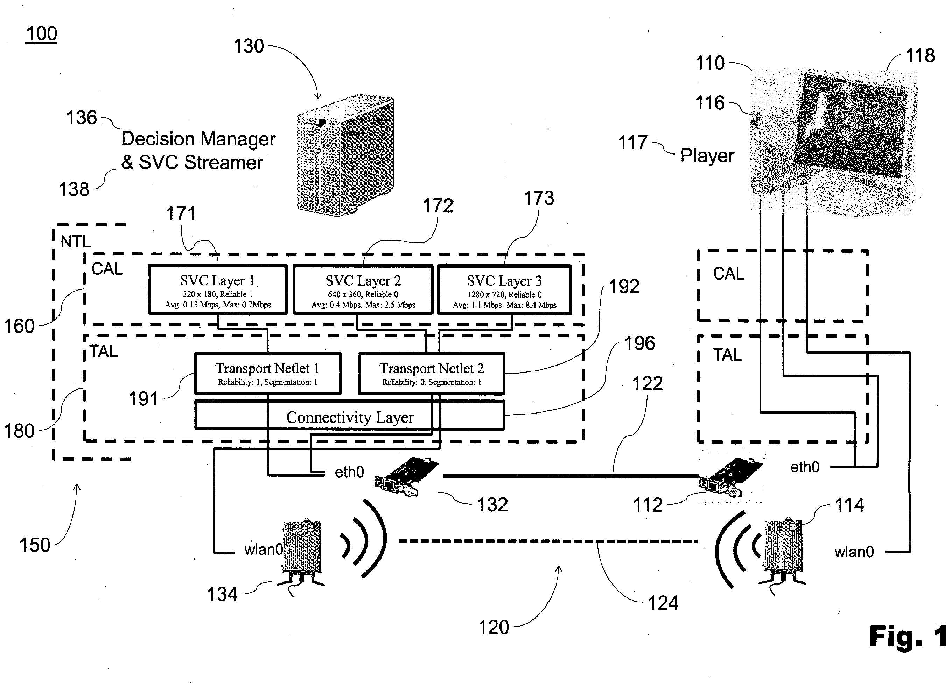

Fig. 1 zeigt ein schematisches Blockschaubild eines Systems, insbesondere Kommunikationssystems 100 gemäß einer Ausführungsform der vorliegenden Erfindung.

In dem Kommunikationssystem 100 ist ein Endgerät 110 über eine Netzumgebung 120 mit einem Server 130 verbunden. Insbesondere weist das Endgerät 110 eine Netzwerkkarte 112 sowie eine Funkschnittstelle (nicht näher dargestellt), die mit einem endgeräteseitigen WLAN- Einwahlknoten 114 eine Funkverbindung etabliert hat, auf. Andererseits weist der Server 130 eine Netzwerkkarte 132 sowie eine Funkschnittstelle (nicht näher dargestellt), die mit einem serverseitigen WLAN-Einwahlknoten 134 eine Funkverbindung etabliert hat, auf. Die Netzumgebung 120 weist ein kabelgebundenes Netz wie etwa Ethernet (eth) 122 und ein Funknetz wie etwa WLAN (wlan) 124 auf.

Das Endgerät 110 ist einem nicht näher dargestellten Benutzer zugeordnet und ist in der Lage, multimediale Inhalte wiederzugeben. In dem dargestellten Beispiel weist das Endgerät 110 eine Recheneinheit 116, die eine Wiedergabeanwendung (Player) 117 aufweist und mit einem Bildschirm 118 verbunden ist, auf. Die Recheneinheit 116 ist in diesem Beispiel als Kompakt-Arbeitsplatzrechner ausgestaltet, die Erfindung ist aber nicht hierauf beschränkt. Die Recheneinheit 116 kann auch als Laptop-Computer, Tablett-Rechner, Smartphone, Spielekonsole, als Teil einer HiFi-Anlage oder in jeder anderen geeigneten Art ausgestaltet sein. Insbesondere kann die Recheneinheit 116 einen integrierten Bildschirm aufweisen, sodass sie auf den externen Bildschirm 118 zur Wiedergabe von Mediendaten nicht angewiesen ist.

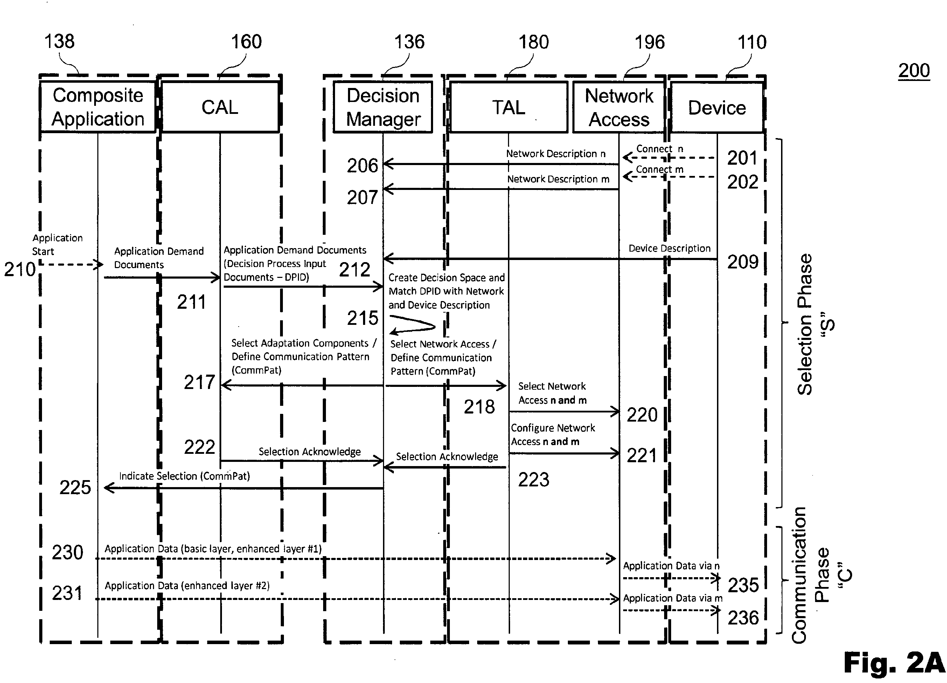

Der Server 130 ist entfernt von dem Endgerät 110 angeordnet und weist unter anderem einen Entscheidungsmanager (Decision Manager) 136 und eine SVC-Streamer-Anwendung 138 auf, die jeweils durch Software und/oder Hardware implementiert sein können. Der Entscheidungsmanager 136 und die Anwendung 138 können jeweils für sich oder in Kooperation auch als Funktionseinheit bzw. funktionale Instanz bezeichnet werden. Der SVC-Streamer 138 ist eine beispielhafte Multimedia-Anwendung und wird nachstehend vereinfachend auch als Anwendung 138 (auch "Composite Application" in Fign. 2A bis 3C) bezeichnet.

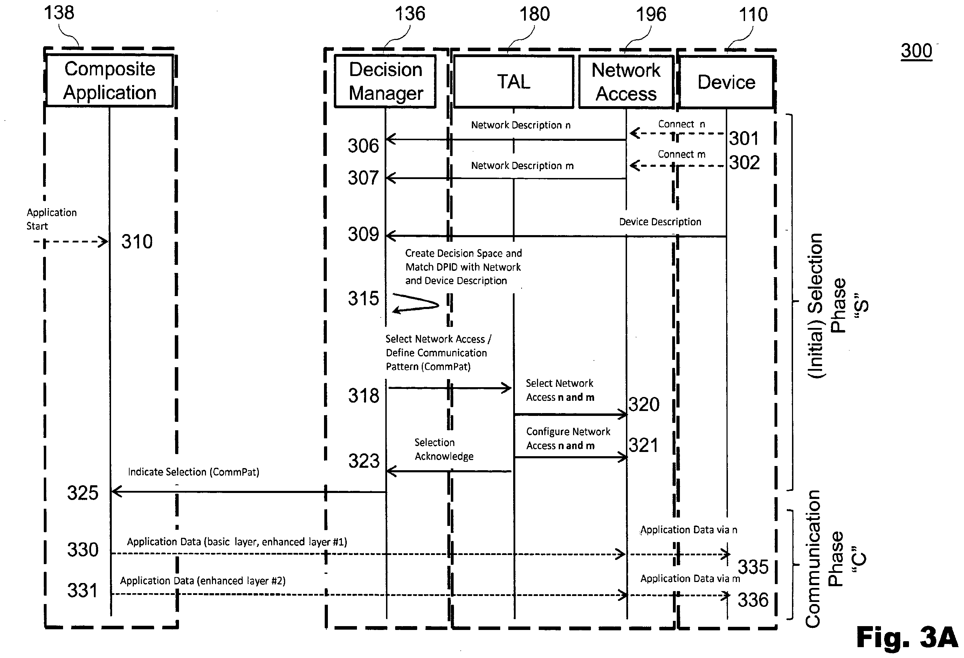

Somit ist das Endgerät 110 über mehrere Netzzugänge 122, 124 mit dem Server 130, der als eine Videoquelle fungiert, verbunden. Der Server 130 verteilt alle Schichten eines skalierbaren Video-Codecs (SVC). Der SVC sieht beispielsweise eine Basisschicht und zwei weitere Subschichten, die auch als Erweiterungsschichten (enhanced layer #1, enhanced layer #2 in Fign. 2A, 3A) bezeichnet werden, vor. Ferner werden die Verfügbarkeit des Netzzugangs und dessen gegenwärtige individuelle Transportkapazität, -zuverlässigkeit und -qualität gemessen. Diese Information wird zu einer Funktionseinheit hin verbreitet, wobei die wahrgenommene Benutzererfahrung z. B. über das E-Modell gemäß ITU-T Recommendation G.107 unter Annäherung beispielsweise eines erwarteten Durchschnittsmeinungswerts (MOS - Mean Opinion Score) abgeschätzt wird.

Für die Datenübertragung wird Gebrauch von einer netztoleranten Schicht (Network Tolerant Layer) NTL 150 gemacht. Einzelheiten und Erläuterungen zum Aufbau der NTL 150, ihrer Subschichten und ihrer Implementierung sind in einer mit gleichem Zeitrang wie die vorliegende Patentanmeldung hinterlegten Patentanmeldung EP 2 938 047 A1 enthalten, worauf hierin insoweit vollumfänglich Bezug genommen wird. In der Architektur der netztoleranten Schicht NTL 150 sind zwei interagierende Subschichten, die hier auch als funktionale Schichten bezeichnet werden, ein Objektmodell mit adaptiven Bindungen und eine Steuerinstanz vorgesehen. Gemäß der Darstellung in Fig. 1 sind als eine "obere" Subschicht der NTL 150 eine inhaltsbewusste Schicht (Content-Aware Layer) CAL 160 und als eine "untere" Subschicht der NTL 150 eine transportbewusste Schicht (Transport-Aware Layer) TAL 180 vorgesehen. Die TAL 180 ist vorgesehen, um Datentransportfähigkeiten über heterogene Netze hinweg zu tragen, während die CAL 160 vorgesehen ist, um den übertragenen Dateninhalt gemäß dem Kontext von mobilen Geräten zu adaptieren. Die TAL 180 und die CAL 160 können ebenfalls als funktionale Einheiten verstanden werden.

Auf der Ebene der CAL 160 stehen gemäß der Darstellung in Fig. 1 drei Schichten eines skalierbaren Video-Codec (SVC - Scalable Video Codec) zur Verfügung, nämlich eine erste SVC-Schicht 171, eine zweite SVC-Schicht 172 und eine dritte SVC-Schicht 173, die wahlweise oder additiv verwendet werden können. Die SVC-Schichten 171, 172, 173 unterscheiden sich gemäß den Angaben in Fig. 1 durch ihre Bildauflösung, ihre Zuverlässigkeit (reliable) und ihre mittlere (Avg) sowie maximale (Max) Übertragungsrate. Auf der Ebene der TAL 180 stehen zwei Transport-Netlets 191, 192, die wahlweise oder additiv verwendet werden können, und eine Konnektivitätsschicht 196 zur Verfügung. Die Transport-Netlets 191, 192 unterscheiden sich durch ihren Zuverlässigkeitsgrad (Reliability) und ggf. ihren Segmentationswert (Segmentation). Die Konnektivitätsschicht 196 steuert einen Netzzugang (Network Access), indem sie die Verbindung sowohl mit der serverseitigen Netzwerkkarte 132 als auch - über die nicht näher dargestellte Funkschnittstelle - mit dem serverseitigen WLAN-Einwahlknoten 134 herstellt. Die Konnektivitätsschicht 196 (Connectivity Layer) entspricht dem Multiple Network Access der Sillberg-Architektur und unterscheidet sich von der Netzzugangsschicht. Nach oben ist die Konnektivitätsschicht 196 mit beiden Transport-Netlets 191, 192 knüpft. Das erste Transport-Netlet 191, das einen hohen Zuverlässigkeitsgrad (1) aufweist, ist über die Subschichtgrenzen hinweg mit der ersten SVC-Schicht 171, die ebenfalls eine hohe Zuverlässigkeit (1) aufweist, und über die Konnektivitätsschicht 196 mit der Netzwerkkarte 132 des Servers 130 verbunden. Das zweite Transport-Netlet 192, das einen niedrigen Zuverlässigkeitsgrad (0) aufweist, ist über die Subschichtgrenzen hinweg mit der zweiten SVC-Schicht 172 und der dritten SVC-Schicht 173, die ebenfalls eine niedrige Zuverlässigkeit (0) aufweisen, und über die Konnektivitätsschicht 196 sowohl mit der Netzwerkkarte 132 des Servers 130 als auch mit der serverseitigen WLAN-Einheit 134 verbunden. Man beachte, dass das erste Transport-Netlet 191, das einen hohen Zuverlässigkeitsgrad aufweist bzw. verlangt, nicht über das WLAN-Netz wlan0 konnektierbar ist.

Auf der Senderseite (Server 130) empfängt die CAL 160 den kodierten geschichteten / multideskriptiven Datenstrom von der Anwendung 138. Die CAL 160 verfügt über genaue technische Informationen der Anwendung 138 und der verwendeten Codecs wie auch über den Einfluss der einzelnen Schichten/Beschreibungen auf die vom Benutzer wahrgenommene Qualität. Durch Prüfung des kodierten Stroms (Stream) identifiziert und trennt die CAL 160 die unterschiedlichen Schichten/Beschreibungen. Die getrennten Ströme (Streams) oder Aggregate werden Stück für Stück, zusammen mit Meta-Informationen, welche die Wichtigkeit der und Erfordernisse für die übermittelten Daten beschreiben, über jeweils eine der SVC-Schichten 171, 172, 173 an die TAL 180 weitergeleitet. Demgemäß ist die TAL 180 fähig, die Zahl übertragener Schichten/Beschreibungen auf der Grundlage der verfügbaren Netzzugänge 132, 134 und der gesamten verfügbaren Bandbreite dynamisch zu adaptieren. Ferner kann die Verteilung von hoch wichtigen Schichten/Beschreibungen durch Verwendung zusätzlicher Schutzmechanismen wie Neuübertragung oder Vorwärts-Fehlerkorrektur sichergestellt werden. Aufgrund der Trennung von Schichten/Beschreibungen der Anwendungsdaten sind zusätzliche Mechanismen vorgesehen, um eine Synchronisierung der Datenströme auf der Empfängerseite zu ermöglichen, um einen gültigen Datenstrom an die Anwendung weiterzugeben. Dies wird erreicht, indem eine zusätzliche Sequenznummer zu dem Stream an die TAL 180 vor jedem Stück hinzugefügt wird.

Auf der Empfängerseite (Endgerät 110) ist ein zusätzlicher Puffer vorgesehen, um die Synchronisierung der getrennten Datenströme und die Weitergabe eines gültigen Anwendungsschicht-Datenstroms zu ermöglichen. Dies kann der gleiche Datenstrom sein, der durch die sendende Anwendung 138 bereitgestellt wird, aber auch ein Datenstrom, in welchem Teile von Schichten oder ganze Schichten fehlen, entweder aufgrund einer Netzüberlastung oder von Entscheidungen in der TAL 180.

Der präsentierte Ansatz verwendet einen neu sequenzierenden Puffer, welcher den Datenstrom auf der Grundlage der Sequenznummern der Datenstücke umsortiert. Da dieser Puffer eine zusätzliche Verzögerung einführt, ist er hinsichtlich Anwendungs- und Netzparametern dimensioniert.

Die Aufteilung des Video-Datenstroms in der Funktionseinheit (Entscheidungsmanager 136, TAL 180, ggf. CAL 160) sowie die Zusammenführung und Synchronisation im Empfänger (Endgerät 110) werden nachstehend anhand eines Sequenzdiagramms, das in mehreren, aufeinander folgenden Teilen in Fign. 2A bis 2C gezeigt ist, im Einzelnen beschrieben.

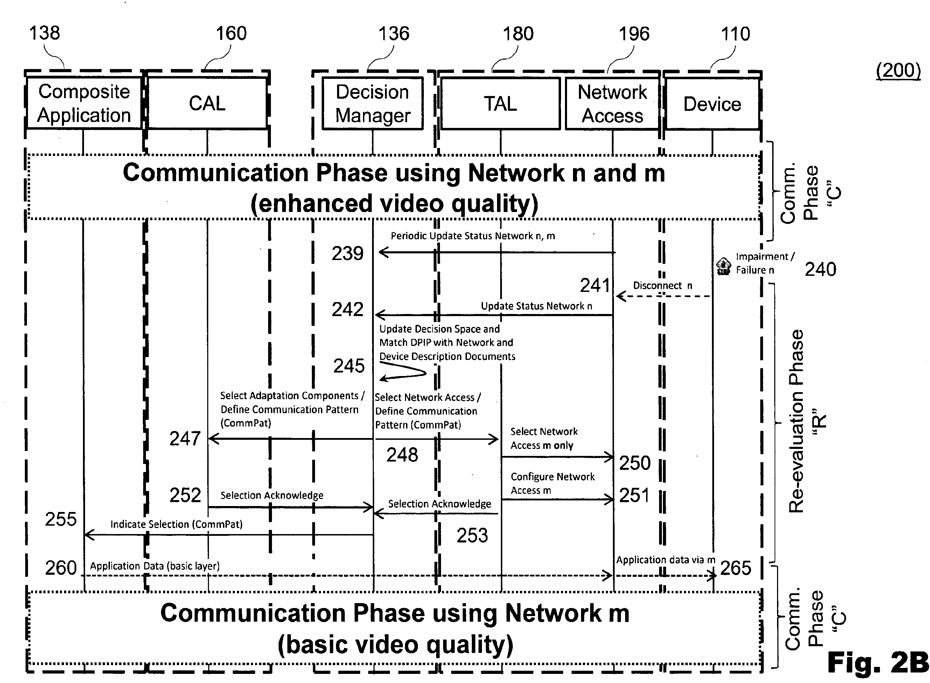

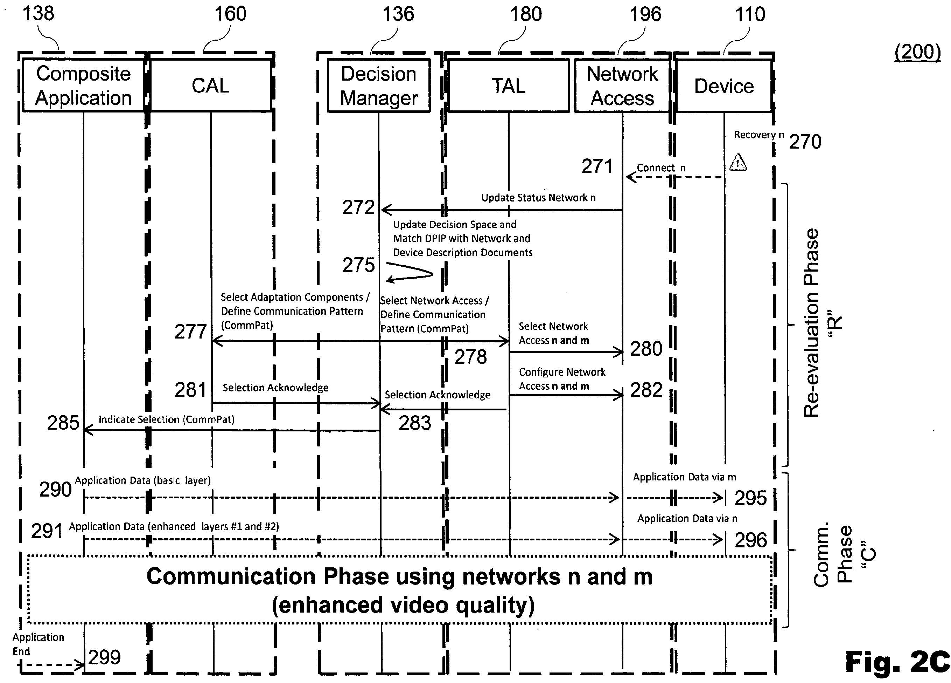

In Fign. 2A bis 2C ist ein erfindungsgemäßer Prozess 200 gemäß einer Ausführungsform anhand eines Sequenzdiagramms in drei aufeinander folgenden Abschnitten dargestellt. Mit anderen Worten, der in Fig. 2A gezeigte Abschnitt des Prozesses 200 wird von dem in Fig. 2B gezeigten Abschnitt gefolgt, und der in Fig. 2B gezeigte Abschnitt wird von dem in Fig. 2C gezeigten Abschnitt gefolgt. Die Verarbeitungsreihenfolge ist stets von oben nach unten.

Als Entitäten bzw. Instanzen sind die bereits erwähnten Komponenten der NTL-Architektur und deren Teilschichten dargestellt. Es wird angenommen, dass zwei Netzzugänge n, m verfügbar sind. Wie in Fig. 1 dargestellt, terminieren die Verbindungen über 122, 124 an den Schnittstellen 112, 114.

Der Prozess 200 beginnt mit einer Selektionsphase (Selection Phase) "S". Zunächst konnektiert das Gerät 110 mit der Konnektivitätsschicht 196 (Schritte 201, 202). Die Konnektivitätsschicht (Connectivity Layer) entspricht dem Multiple Network Access der Sillberg-Architektur. "Network Access" steht für Multiple Network Access. Diese leitet diese Information mit Informationen über die verfügbaren Netzzugänge n, m an den Entscheidungsmanager 136 weiter (Schritte 206, 207). Das Endgerät 110 selbst sendet eine Beschreibung eigener Fähigkeiten, Anforderungen und Parameter direkt an den Entscheidungsmanager 136 (Schritt 209). Nach dem Start der Anwendung (Schritt 210) und Übermittlung von deren Anforderungen (Schritt 211) werden diese von der CAL 180 an den Entscheidungsmanager 136 weitergeben (Schritt 212). Dieser vergleicht die Anforderungen der Anwendung mit denen der Netzzugänge (Schritt 215) und selektiert daraus einige nutzbare Kommunikationsmuster (Communication Pattern) und sendet diese an beide kooperierende NTL-Teilschichten CAL 160 and TAL 180 (Schritte 217, 218). Beispielhaft selektiert die TAL 180 nun die Netzzugänge n und m (Schritt 220) und konfiguriert diese (Schritt 221). Nach Bestätigung der Auswahl (Schritte 222, 223) erhält die Anwendung 138 das verwendete Kommunikationsmuster (Schritt 225).

Daraufhin beginnt eine Kommunikationsphase (Communication Phase) "C" und die Anwendung 138 beginnt mit dem Senden der Nutzinformation (Schritte 230, 231). Die Konnektivitätsschicht 196 verteilt diese Informationen entsprechend über die Netzzugänge n und m (Schritte 235, 236). Da beide Netzzugänge n und m zur Verfügung stehen, können die Anwendungsdaten (Application Data) über eine Basisschicht (basic layer) und zwei Erweiterungsschichten (enhanced layer #1, enhanced layer #2) verteilt und daher mit erhöhter Video-Qualität übermittelt werden. Somit ist die Kommunikationsphase C unter Verwendung beider Netzzugänge n und m eine Kommunikationsphase mit erhöhter Video-Qualität (Communication Phase using Network n and m (enhanced video quality)), vgl. ab nun Fig. 2B.

Während der Kommunikationsphase C führt die Konnektivitätsschicht 196 gemäß der Darstellung in Fig. 2B ständig wiederholte Aktualisierungen des Netzzustands durch und übermittelt diese an den Entscheidungsmanager 136 (Schritt 239).

Über die Schnittstellenüberwachung stellt das Endgerät 110 eine Störung oder Qualitätsbeeinträchtigung der Netzwerkschnittstelle n fest (Schritt 240). Daraufhin beginnt eine Reevaluierungsphase (Re-evaluation Phase) "R", die damit beginnt, dass das Endgerät 110 die Netzwerkschnittstelle n abschaltet (Schritt 241). Daraufhin sendet die Konnektivitätsschicht 196 eine Aktualisierung des Netzzustandes an den Entscheidungsmanager 136 (Schritt 242). Dieser bewertet die aktuelle Situation (Schritt 245) und sendet nun mögliche Kommunikationsmuster an die kooperierenden NTL-Teilschichten CAL 160 und TAL 180 (Schritte 247, 248). Nun selektiert die TAL 180 den Netzzugang m allein (Schritt 250) und konfiguriert diesen (Schritt 251). Nach Bestätigung der Auswahl (Schritte 252, 253) erhält die Anwendung 138 das verwendete Kommunikationsmuster (Schritt 255) und beginnt in einer erneut einsetzenden Kommunikationsphase "C" mit dem Senden der Nutzinformation (Schritt 260), woraufhin die Konnektivitätsschicht 196 diese Informationen entsprechend über den Netzzugang m verteilt (Schritt 265). Da nur noch der Netzzugang m zur Verfügung steht, können die Anwendungsdaten (Application Data) nur noch über die Basisschicht (basic layer) und daher nur noch mit Basisqualität übermittelt werden. Somit ist die Kommunikationsphase C unter Verwendung des Netzzugangs m allein eine Kommunikationsphase mit Video-Basisqualität (Communication Phase using Network m (basic video quality)).

Nach einer Weile ist, wie ab nun in Fig. 2C gezeigt, der Netzzugang n wieder stabil (Schritt 270) und das Gerät (Endgerät) 271 konnektiert in einer nun einsetzenden Reevaluierungsphase "R" wieder über diese Schnittstelle (Schritt 271). Dies teilt die Konnektivitätsschicht 196 wiederum dem Entscheidungsmanager 136 mit (Schritt 272). Dieser bewertet die aktuelle Situation (Schritt 275) stellt auf Basis seines Wissens die ursprüngliche Nutzung der Konnektivität über den Netzzugang n und m wieder her (Schritte 277 bis 283, die inhaltlich den Schritten 217 bis 223 entsprechen, sodass auf eine erneute Erläuterung an dieser Stelle abgesehen werden kann). Der weitere Verlauf des Verfahrens entspricht nun wieder der Kommunikationsphase "C" mit erhöhter Video-Qualität (Schritte 290 bis 296, die inhaltlich den Schritten 230 bis 236 entsprechen, sodass auf eine erneute Erläuterung an dieser Stelle ebenfalls abgesehen werden kann). Der Prozess 200 endet mit dem Ende der Anwendung 138 (Schritt 299).

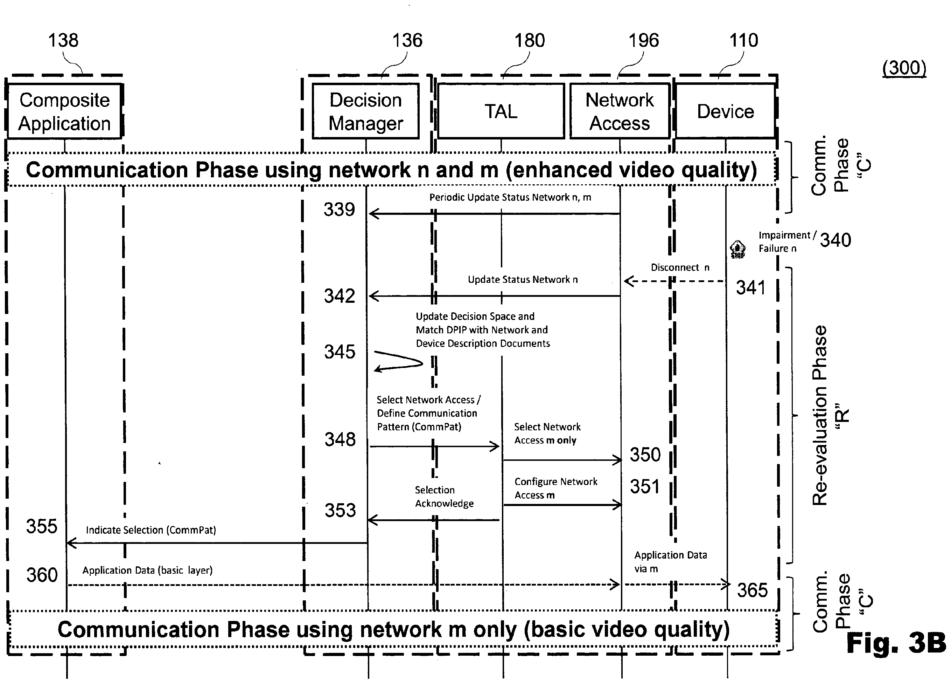

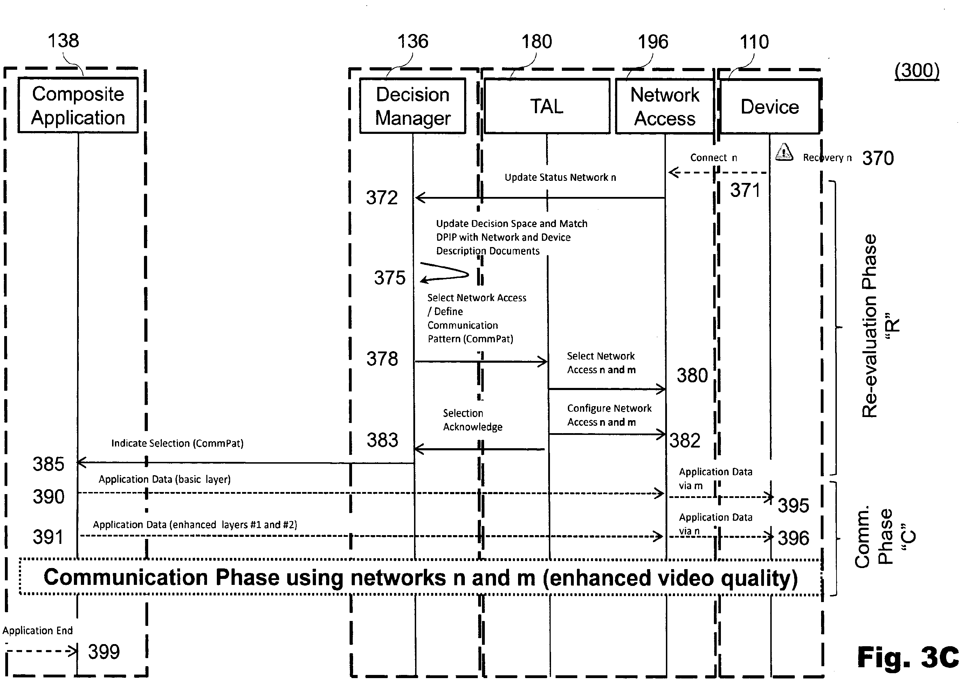

In Fign. 3A bis 3C ist ein erfindungsgemäßer Prozess 300 gemäß einer anderen Ausführungsform anhand eines Sequenzdiagramms in drei aufeinander folgenden Abschnitten dargestellt. Mit anderen Worten, der in Fig. 3A dargestellte Abschnitt des Prozesses 300 wird von dem in Fig. 3B gezeigten Abschnitt gefolgt, und der in Fig. 3B gezeigte Abschnitt wird von dem in Fig. 3C gezeigten Abschnitt gefolgt. Die Verarbeitungsreihenfolge ist stets von oben nach unten.

Der Prozess 300 gemäß der Darstellung in Fign. 3A bis 3C unterscheidet sich von dem in Fign. 2A bis 2C gezeigten Prozess 200 der vorherigen Ausführungsform darin, dass keine inhaltsbewusste Schicht CAL vorgesehen ist. Alle Prozessschritte 3xx, die mit der Ziffer "3" beginnen, entsprechen inhaltlich Prozessschritten 2xx des in Fign. 2A bis 2C gezeigten Prozesses 200, sodass zur Vermeidung von Wiederholungen auf die diesbezügliche Beschreibung vollumfänglich Bezug genommen wird. Da allerdings die inhaltsbewusste Schicht CAL in der vorliegenden Ausführungsform fehlt, entfallen in dem Prozess 300 dieser Ausführungsform diejenigen Schritte, die auf die CAL entfallen, und haben daher die Schritte 211, 212, 217, 222, 247, 252, 277, 282 der vorherigen Ausführungsform in der vorliegenden Ausführungsform keine Entsprechung. Die "Entscheidungsprozess-Eingangsdokumente", auch DPIDs (Decision Process Input Documents) genannt, können analog der Schritte 211, 212 (Fig. 2A) durch eine Funktionseinheit wie etwa die Anwendung oder den Entscheidungsmanager definiert werden. Die generischen Anforderungsdokumente der Anwendungen und die die Transporteigenschaftsdokumente sowie die Geräteeigenschaftsdokumente sind die DPIDs. Die DPIDs bilden in Summe den Entscheidungsraum aus denen der Entscheidungsmanager den bestmöglichen Abgleich zwischen Anforderung und Transportfähigkeiten unter optionaler Anwendung von Politiken durchführt

Es versteht sich, dass bei Anwendung dieser Ausführungsform auch in Fig. 1 die CAL 160 wegzudenken ist. Die abstrakt gelieferte Funktionalität des CAL kann in die Anwendung, beispielsweise das Mediastreaming H.265 SVC, integriert werden.

Es versteht sich ferner, dass die Erfindung nicht auf die zwei Netzarten Ethernet und WLAN beschränkt ist.

Es versteht sich außerdem, dass die Anwendung 138, die gemäß Darstellung in Fig. 1 in dem Server 130 verankert ist und gemäß Fign. 2A bis 3C Prozess- bzw.-Verfahrensschritte auf der Serverseite ausführt, auch auf einem Server und ein Endgerät verteilt oder in einem Endgerät allein implementiert sein kann. In diesem Sinn können Teile der SVC-Streaming-Anwendung 138 des Servers 130 auch in der Anwendung eines Endgeräts, wie dem Endgerät 110, implementiert sein.

Unter Verwendung von mehr als einem Netzzugang gleichzeitig, z. B. fest und WLAN-Netz, fest und zellulär (HDSP, UMTS, LTE, ...), oder WLAN und zellulär, weist die Funktionseinheit gemäß dieser Erfindung die Flexibilität auf, die unterschiedlichen Schichten des skalierbaren Video-Codecs über unterschiedliche Netzzugänge gemäß den gegenwärtigen Netzbedingungen und -richtlinien zu leiten oder umzuleiten, um den Verkehr zu handhaben. Hierdurch ist die Funktionseinheit der Minimalerfordernisse für die Übertragung der unterschiedlichen SVC-Schichten ebenso wie der eingesetzten Verkehrsrichtlinien gewahr und bringt sie mit den tatsächlichen Netzbedingungen gemäß den Spektrumsmessungen in dem Band für die verfügbaren drahtlosen Netzzugänge in Übereinstimmung. Auf der Grundlage dieser Übereinstimmung entscheidet sie auch, wie viele (abhängige) Schichten zu dem Endpunkt übertragen werden, und ob zusätzliche Mechanismen zur Fehlerbeseitigung erforderlich sind.

Das in dieser Anmeldung offenbarte Verfahren zeigt auch dann Vorteile, wenn nur ein einziger Netzzugang verfügbar oder vorhanden ist, da bei festgestellter, mangelnder Netzqualität und damit einhergehender geringer Nutzbandbreite zusätzliche Schichten suspendiert werden können. Der Stand der Technik basiert auf reaktivem Anpassen der Anwendungsqualität ohne Wissen über den aktuellen Zustand des Netzes. Entsprechend sind Anpassungen träge. Durch das Hinzunehmen der Spektralmessungen zusätzlich dazu, dass nicht die neue Metrik des SNR mit verwendet wird, kann der Zustand der Netzverbindung besser abgeschätzt werden, wodurch eine gezielte Anpassung der Anwendungsqualität und der Transporteigenschaften, ermöglicht wird.

Die Funktionseinheit wird unmittelbar über die Änderungen der tatsächlichen Netzbedingungen informiert und überprüft ihre Entscheidungen dementsprechend. Hierdurch übernimmt der Verlust, die Erholung oder die Instabilität eines Netzzugangs Vorrang gegenüber Netzqualitätsanzeichen. Die Funktionseinheit -wie durch diese Anmeldung offenbart - kann vorzugsweise in Abhängigkeit von der konkreten Netzkonfiguration jeweils auf einem Medienserver, einem Videokonferenzserver oder - falls unterschiedliche (administrative) Netzdomänen überspannt werden - einem "Traversal Using Relays around NAT"-(TURN)-Server, einem "Session Border Controller" (SBC), einem kombinierten Zugangsrouter/Anwendungsschicht-Gateway (ALG - Application Layer Gateway) oder einem "Media-Aware Network Element" (MANE) eingesetzt werden. Umgekehrt kann mit wachsender Verarbeitungsleistung von (mobilen) Geräten z. B. durch Multi-Core-Technologieren die Funktionseinheit auch dem Gerät, welches die in dieser Anmeldung offenbarte Technologie für interaktives Video oder Video-Upload eines zuvor erfassten Videos verwendet, innewohnen. Da die Funktionseinheit, die den Netzelementen innewohnt, wie vorstehend erwähnt, einen Überblick über die tatsächliche Gesamtverkehrssituation aufweisen kann, kann sie auch einen Lastausgleich berücksichtigen, um eine angemessene Verwendung von Netzressourcen über die Verbindungsvorrichtungen hinweg vorzusehen.

Der in dieser Anmeldung offenbarte Ansatz unterstützt die hinzugefügte Kenntnis über Anwendungsinhalt und -erfordernisse (wie durch CAL bereitgestellt) und Netzeigenschaften (durch Netzüberwachung bzw. -beobachtung bereitgestellt), um Transportdienste der TAL anzupassen. Transportprotokolle werden auf der Grundlage der Eigenschaften und gegenwärtigen Bedingungen des verwendeten Netzzugangs einerseits und der Erfordernisse der Anwendung für einen spezifischen Fluss andererseits ausgewählt. Eine Anpassung von Transportdiensten umfasst hierdurch eine feinkörnige Auswahl von Protokollmechanismen wie etwa Umsortierung, Neuübertragung, Überlaststeuerung oder FEC. Auf diese Weise kann stets die optimale Kombination von Transportdienst und Netzzugang für einen bestimmten Anwendungs-Subflow ausgewählt werden, ohne die Anwendung in den Entscheidungsprozess einzubinden. Die zusätzliche Netzintelligenz ergibt eine bessere Benutzererfahrung insgesamt, ohne dass QoS-Ressourcen innerhalb des Netzes reserviert werden müssen, was heutzutage in gegenwärtigen öffentlichen Netzen nicht verfügbar ist.

Es erfordert jedoch eine Beobachtung der Netzqualität der jeweiligen Netzzugänge, was durch Protokolle ähnlich dem RTCP und/oder lokale SNR-Messungen bereitgestellt werden kann.

Ein Video-Streaming unter Verwendung des H.264/SVC Codec ermöglicht eine Anpassung des bereits kodierten Video-Streams hinsichtlich der verfügbaren Netzressourcen. Insbesondere können eine oder mehrere Schichten teilweise oder ganz fallen gelassen werden, was zu einer niedrigeren Wiedergabequalität, Auflösung oder Bildfrequenz führt. Obwohl die vom Benutzer wahrgenommene Qualität reduziert ist, treten keine unerwünschten Störungen wie etwa Artefakte, Einfrieren oder Springen auf. Zusammen mit Information über den Einfluss solcher Anpassungen auf die vom Benutzer wahrgenommene Qualität kann die Video-Wiedergabe hinsichtlich der Netzbedingungen optimiert werden. Wichtige Schichten des Video-Streams, wie etwa die Basisschicht, die fehlerfrei übertragen werden müssen, um das Video wiederzugeben, können mit zusätzlichen Mechanismen wie FEC oder Paketneuübertragung geschützt werden. Auf der Grundlage des Annex G des H.264/SVC Standard [H264] "Advanced video coding for generic audiovisual services" (Fortgeschrittene Video-Kodierung für generische audiovisuelle Dienste) ist ein Skript implementiert, welches die Trennung der einzelnen Schichten ermöglicht. Um eine Synchronisierung auf der Empfängerseite zu ermöglichen, wird eine Sequenznummer vor dem Anwendungskopf (-Header) jedes Rahmens innerhalb jeder Schicht eingefügt. Die getrennten Streams werden dann an die transportbewusste Schicht TAL 180 übergeben, wofür in diesem Beispiel die Open-Source-Software NENA verwendet werden kann.

Die Netlet-basierte Knotenarchitektur (NENA - Netlet-based Node Architecture, <http://nena.intend-net.org> http://nena.intend-net.org) ist ein Laufzeit-Netz, welches ermöglicht, dass Knoten simultan mit mehreren Netzen gleichzeitig verbinden bzw. konnektieren. Diese Netze können auf unterschiedliche Protokollfamilien, die spezialisierte Netzprotokolle verwenden, gegründet sein.

Anwendungen greifen auf diese Protokolle über ein API zu, welches von Einzelheiten des Netzbetriebs abstrahieren: Anstelle einer Bereitstellung von Netzadressen und -protokollen geben Anwendungen global einzigartige Namen als URls und Anforderungen an den angefragten Kommunikationsdienst an, um eine Kommunikation mit dem Inhalt, Dienst oder Netzrechner (Host), der mit dem Namen assoziiert ist, zu initiieren. Protokolle oder vollständige Protokollstapel (Stacks) in NENA sind in sogenannten Netlets verkapselt. Die Komponente "Netlet Selection" führt die Auswahl von Netzen und Netlets unter Verwendung der angefragten Namen und Anwendungsanforderungen als Auswahlkriterien durch. Ein Multiplexer bildet die Basisschicht einer Protokollfamilie, führt ein Netlet-Multiplexen durch und implementiert - abhängig von der Familie -Adressierungs- und Übergabemechanismen. Netzzugänge repräsentieren eine physikalische oder logische Netzschnittstellenkarte. Somit muss das Multiplexen mehrerer virtueller Netze über das gleiche physikalische Netz außerhalb von NENA verwirklicht werden.

Die Prozeduren, die im Zusammenhang mit der oben beschriebenen Erfindung erläutert wurden, können auch auf skalierbare und Multideskriptions-Codecs und Erweiterungsschichten von Video- und Audio-Codecs angewendet werden.

Die in Bezug auf die dargestellten Ausführungsformen und -beispiele beschriebenen Merkmale der Erfindung können auch bei anderen Ausführungsformen der Erfindung vorhanden sein, außer wenn es anders angegeben ist oder sich aus technischen Gründen von selbst verbietet.

## Patentansprüche

1. Verfahren zur Übermittlung von kodierten Mediendaten auf der Grundlage eines Schichtenmodells, mit den Schritten:
a) Aufteilen der Mediendaten auf eine Basisschicht, die die für die Dekodierung mindestens erforderlichen Daten enthält, und wenigstens eine zusätzliche Erweiterungsschicht, die die für die Dekodierung von Qualitätsmerkmalen des Ursprungsmediums erforderlichen Daten enthalten;
b) Übermitteln der Basisschicht und der wenigstens einen Erweiterungsschicht über wenigstens zwei Netzzugänge;
c) Auswählen eines ersten Netzzugangs mit einer für die Übermittlung der Basisschicht ausreichenden Netzqualität und/oder -beständigkeit zur Übermittlung der Basisschicht, und
d) Auswählen wenigstens eines zweiten Netzzugangs unter den Netzzugängen in Abhängigkeit von der Bandbreite des ersten Netzzugangs und der Netzqualität und der Netzbeständigkeit der Netzzugänge zur Übermittlung der wenigstens einen Erweiterungsschicht.

2. Verfahren gemäß Anspruch 1, **dadurch gekennzeichnet, dass** das Verfahren eine codec-spezifische Parametrisierung der Priorität für die Teilschichten eines Codecs berücksichtigt, wobei die Schichten (171, 172, 173) sich durch ihre Bildauflösung, ihre Zuverlässigkeit (Reliable) und ihre mittlere (Avg) sowie maximale (Max) Übertragungsrate unterscheiden.

3. Verfahren gemäß Anspruch 1 oder 2, weiter **gekennzeichnet durch** die Schritte:
e) Ermitteln eines Rauschabstands von verfügbaren Netzzugangspunkten; und
f) Ermitteln der Netzqualität der verfügbaren Netzzugangspunkte unter Einbeziehung der Metrik des ermittelten Rauschabstands.

4. Verfahren gemäß einem der vorstehenden Ansprüche, weiter **gekennzeichnet durch** den Schritt:
g) Hinzufügen einer Sequenznummer vor jedem Stück der kodierten Mediendaten vor dem Übermitteln des Stücks.

5. Verfahren zum Empfang von kodierten Mediendaten auf der Grundlage eines Schichtenmodells, mit den Schritten:
A) Empfangen von Mediendaten, die auf eine Basisschicht und wenigstens eine zusätzliche Erweiterungsschicht aufgeteilt sind, über wenigstens einen Netzzugang; und
B) Zusammenführen der Basisschicht und der wenigstens einen Erweiterungsschicht der so erfolgreich übermittelten Schichten zu dekodierbaren Mediendaten,
wobei die Mediendaten mittels eines Verfahrens gemäß einem der vorstehenden Ansprüche bereitgestellt wurden.

6. Verfahren gemäß Anspruch 5, weiter **gekennzeichnet durch** den Schritt:
C) Puffern empfangener Datenstücke der Mediendaten, und
D) Zusammenführen der empfangenen und gepufferten Datenstücke in der richtigen Reihenfolge, vorzugsweise anhand einer jedem Datenstück vorangestellten Sequenznummer.

7. Verfahren gemäß einem der vorstehenden Ansprüche, **dadurch gekennzeichnet, dass** die wenigstens eine Erweiterungsschicht Daten zur Dekodierung von einem oder mehreren der folgenden Qualitätsmerkmale enthält für:
- eine höhere Übertragungsfehlerredundanz als die in der Basisschicht,
- eine höhere Video-Auflösung als die in der Basisschicht,
- eine 3-dimensionale Video-Darstellung,
- eine höhere Bildwiederholrate als die in der Basisschicht,
- eine höhere Audio-Empfangsqualität als die in der Basisschicht,
- eine mehrkanalige Empfangsqualität, insbesondere eine mehrkanalige Stereo-, Surround- oder Spacial-Audio-Empfangsqualität.

8. Vorrichtung zur Ausführung des Verfahrens nach einem der vorstehenden Ansprüche, wobei die Vorrichtung insbesondere einen Server (130) und/oder ein mobiles Endgerät (110) aufweist.

## Claims

1. A method for transmitting encoded media data on the basis of a layer model, comprising the following steps:
a) dividing the media data into a base layer, which contains at least the data required for decoding, and at least one additional enhancement layer, which contains the data required for decoding quality features of the source medium;
b) transmitting the base layer and the at least one enhancement layer via at least two network accesses;
c) for transmitting the base layer, selecting a first network access that has sufficient network quality and/or stability for transmitting the base layer; and
d) for transmitting the at least one enhancement layer, selecting at least one second network access from among the network accesses, based on the bandwidth of the first network access and the network quality and network stability of the network accesses.

2. The method according to claim 1, **characterized in that** the method factors in a codec-specific parameterization of the priority for the sub layers of a codec, wherein the layers (171, 172, 173) differ from one another in terms of their image resolution, their reliability (reliable), and their average (avg) and maximum (max) transmission rates.

3. The method according to claim 1 or 2, further **characterized by** the following steps:
e) determining a signal-to-noise ratio of available network access points; and
f) determining the network quality of the available network access points by including the metrics of the determined signal-to-noise ratio.

4. The method according to any one of the preceding claims, further **characterized by** the step of:
g) adding a sequence number in front of each piece of encoded media data prior to the transmission of said piece.

5. A method for receiving encoded media data on a basis of a layer model, comprising the following steps:
A) receiving media data that are divided into a base layer and at least one additional enhancement layer via at least one network access; and
B) combining the base layer and the at least one enhancement layer of the layers thus successfully transmitted into decodable media data,
wherein the media data have been provided by means of a method according to any one of the preceding claims.

6. The method according to claim 5, further **characterized by** the step of:
C) buffering received data pieces of the media data, and
D) combining the received and buffered data pieces in the correct order, preferably based on a sequence number in front of each data piece.

7. The method according to any one of the preceding claims, **characterized in that** the at least one enhancement layer contains data for decoding one or more of the following quality features:
- higher transmission error redundancy as compared with the base layer,
- higher video resolution as compared with the base layer,
- a 3-dimensional video display,
- a higher image repetition rate as compared with the base layer,
- higher audio reception quality as compared with the base layer,
- a multi-channel reception quality, in particular a multi-channel stereo, surround, or spatial audio reception quality.

8. A device for carrying out the method according to any one of the preceding claims, wherein the device comprises in particular a server (130) and/or a mobile terminal device (110).

## Revendications

1. Procédé de transmission de données multimédia codées sur la base d'une architecture en couches, avec les étapes de :
a) partage des données multimédia sur une couche de base, qui contient les données nécessaires au moins au décodage, et au moins une couche d'extension supplémentaire, qui contiennent les données nécessaires au décodage de caractéristiques de qualité du support d'origine ;
b) transmission de la couche de base et de l'au moins une couche d'extension par le biais d'au moins deux accès au réseau ;
c) sélection d'un premier accès au réseau avec une qualité et/ou stabilité de réseau suffisante pour la transmission de la couche de base pour la transmission de la couche de base, et
d) sélection d'au moins un deuxième accès au réseau parmi les accès au réseau en fonction de la largeur de bande du premier accès au réseau et de la qualité de réseau et de la stabilité de réseau des accès au réseau pour la transmission de l'au moins une couche d'extension.

2. Procédé selon la revendication 1, **caractérisé en ce que** le procédé tient compte d'un paramétrage spécifique au codec de la priorité pour les couches partielles d'un codex, dans lequel les couches (171, 172, 173) se distinguent par leur résolution d'image, leur fiabilité (Reliable) et leur vitesse de transmission moyenne (Avg) ainsi que maximale (Max).

3. Procédé selon la revendication 1 ou 2, **caractérisé en outre par** les étapes de :
e) détermination d'un rapport signal/bruit de points d'accès au réseau disponibles ; et
f) détermination de la qualité de réseau des points d'accès au réseau disponibles en intégrant la métrique du rapport signal/bruit déterminé.

4. Procédé selon l'une quelconque des revendications précédentes, **caractérisé en outre par** l'étape de :
g) ajout d'un numéro de séquence devant chaque morceau des données multimédia codées avant la transmission du morceau.

5. Procédé de réception de données multimédia codées sur la base d'une architecture en couches, avec les étapes de :
A) réception de données multimédia, qui sont partagées sur une couche de base et au moins une couche d'extension supplémentaire, par le biais d'au moins un accès au réseau ; et
B) regroupement de la couche de base et de l'au moins une couche d'extension des couches ainsi transmises avec succès vers des données multimédia décodées,
dans lequel les données multimédia ont été mises à disposition au moyen d'un procédé selon l'une quelconque des revendications précédentes.

6. Procédé selon la revendication 5, **caractérisé en outre par** l'étape de :
C) mise en tampon de morceaux de données reçus des données multimédia, et
D) regroupement des morceaux de données reçus et mis en tampon dans le bon ordre, de préférence à l'aide d'un numéro de séquence précédant chaque morceau de données.

7. Procédé selon l'une quelconque des revendications précédentes, **caractérisé en ce que** l'au moins une couche d'extension contient des données pour le décodage d'une ou plusieurs caractéristiques de qualité suivantes pour :
- une plus grande redondance d'erreur de transmission que celle dans la couche de base,
- une plus grande résolution vidéo que celle dans la couche de base,
- une représentation vidéo tridimensionnelle,
- une plus grande fréquence de rafraîchissement que celle dans la couche de base,
- une plus grande qualité de réception audio que celle dans la couche de base,
- une qualité de réception multicanal, en particulier une qualité de réception Stéréo, Surround ou Spacial-Audio multicanal.

8. Dispositif pour la réalisation du procédé selon l'une quelconque des revendications précédentes, dans lequel le dispositif présente en particulier un serveur (130) et/ou un terminal mobile (110).
